# EUROPÄISCHE PATENTSCHRIFT

(11) **EP 0 875 069 B1**
(45) Veröffentlichungstag und Bekanntmachung des Hinweises auf die Patenterteilung: **21.07.1999**
(21) Anmeldenummer: 96944011.4
(22) Anmeldetag: 19.12.1996
(51) Int. Cl.: H01H 3/20, H01H 25/04, B60R 16/02

(54) **DREHSCHALTER MIT ZWISCHENSPERRE ZWISCHEN DEN DREHSCHRITTEN**
ROTARY SWITCH WITH AN INTERMEDIATE BLOCKING DEVICE BETWEEN THE ROTATION STEPS
INTERRUPTEUR ROTATIF COMPORTANT UN DISPOSITIF D'ARRET INTERMEDIAIRE ENTRE LES PAS DE ROTATION

(30) Priorität: 20.01.1996 DE 19601984
(43) Veröffentlichungstag der Anmeldung: 04.11.1998
(73) Patentinhaber: ITT Automotive Europe GmbH, 60488 Frankfurt am Main (DE)
(72) Erfinder: MOZER, Reiner, D-71665 Vaihingen-Enz (DE); NEUBAUER, Walter, D-74348 Lauffen (DE)
(74) Vertreter: Dreiss, Fuhlendorf, Steimle & Becker
(86) Internationale Anmeldenummer: EP9605705
(87) Internationale Veröffentlichungsnummer: WO9726669

(56) Entgegenhaltungen:
- DE-A- 2 835 256
- US-A- 4 455 885

## Beschreibung

Bei manuell betätigten elektrischen Schaltern ist es vielfach sehr wichtig, daß nicht versehentlich der Schalter eingeschaltet, weitergeschaltet oder in die falsche Schaltrichtung geschaltet wird. Es werden daher vielfach Maßnahmen getroffen, um zu verhindern, daß ein elektrischer Schalter versehentlich in unerwünschter Weise betätigt wird. So ist beispielsweise in der Patentanmeldung P 44 39 905.7 der Anmelderin ein Getriebeschalter beschrieben, bei dem eine neutrale Stellung arretiert werden kann, so daß das Getriebe eines Motors nicht versehentlich eingeschaltet oder von Vorwärtsrichtung in Rückwärtsrichtung und umgekehrt geschaltet werden kann.

Ähnliche Probleme können auch bei manuell betätigten Drehschaltern auftreten, bei denen eine Handhabe versehentlich weitergedreht oder in der verkehrten Richtung gedreht wird, so daß hier ein unerwünschter Schaltzustand erreicht wird. Dieses Problem kann auch auftreten bei Lenkstockschaltern, bei denen in dem Betätigungshebel ein durch einen Drehgriff betätigter Drehschalter eingefügt ist.

Die Erfindung geht daher aus von einem Schalter der sich aus dem Oberbegriff des Anspruchs 1 ergebenden Gattung. Aufgabe der Erfindung ist es zu verhindern, daß bei einem derartigen Drehschalter aus Versehen eine neue Schaltstellung eingestellt werden kann.

Die Aufgabe wird durch die sich aus dem kennzeichnenden Teil des Anspruchs 1 ergebende Merkmalskombination gelöst. Die Erfindung besteht im Prinzip darin, die einzelnen Drehstellungen des Schalters mittels geeigneter Rastmittel vorzugeben. Erfindungsgemäß wird dabei ein Rastring vorgeschlagen, welcher mit Hilfe einer Rastkontur unter Vorspannung in eine zugeordnete Rastkontur des gehäusefesten Trägers eingreift. Die Vorspannung kann von beachtlicher Größe sein, so daß nur unter bewußter Aufwendung von erheblicher Kraft der nächste Schaltschritt erreicht werden kann. Ein versehentliches Schalten oder Überschalten ist somit wenig wahrscheinlich. Da die Rastkontur und die Gegenkontur vorzugsweise miteinander verzahnt sind, muß die Rastkontur erstmal aus der Gegenkontur gehoben werden, um den nächsten Schaltschritt durchführen zu können. Die Kontur kann dabei derart gewählt sein, daß die Zähne miteinander zugeordneten schrägen Flächen versehen sind, die bei einer Drehbewegung des Handgriffs selbsttätig zu einem Herausheben der Rastkontur aus der Gegenkontur führen, indem die Zahnschrägen wie Rampen wirken, die den Rastring aus der Gegenkontur schieben. Bei einer Rechteckverzahnung ist allerdings ein gezieltes Herausheben beispielsweise durch eine Längsverschiebung des Handgriffes notwendig, um die Rastkontur gegenüber der Gegenkontur verdrehen zu können.

Um die Zahl der Schaltstellungen oder anders ausgedrückt die Zahl der Drehschritte des Drehschalters zu begrenzen, empfiehlt sich in Weiterbildung der Erfindung die Merkmalskombination nach Anspruch 2. Danach können die beiden einander zugeordneten Rastkonturen so lange schrittweise gegenein-ander verdreht werden, bis die Anschläge von Rastring und gehäusefestem Träger gegeneinander anschlagen.

Um die zur selbsttätigen Verrastung erwünschte Vorspannung in einfacher Weise zu erreichen, empfiehlt sich in Weiterbildung der Erfindung die Merkmalskombination nach Anspruch 3. Die Spiralfeder hält somit die Kontur des Rastrings ständig in Eingriff mit der Gegenkontur am Träger, wobei wie weiter oben schon erwähnt, durch schräge Zahnflanken der gegeneinander kämmenden Konturen durch eine Drehbewegung der Rastring entgegen der Vorspannung aus der Verzahnung gehoben werden kann, so daß er nach Überschreiten eines kritischen Punktes unter der Vorspannung selbsttätig in den nächsten Zahnschritt einrastet.

Die einzelnen Zähne der Rastkontur können dabei in gleichen Abständen auf der Stirnfläche eines Rings verteilt sein, was dementsprechend auch für die Gegenkontur auf dem Träger gilt. Die Zähne können eine Dreieckform haben oder auch sinusförmig sein, falls man sich nicht, wie weiter oben erläutert, für eine Rechteckverzahnung entscheidet.

Will man nun gleichwohl durch eine einfache Drehbewegung die einzelnen Drehschritte nacheinander rastend erreichen und in Sonderfällen, etwa bei einzelnen Ausfertigungen des Schalters, erzwingen, daß der nächste Rastschritt erst nach einer besonderen Manipulation erreicht wird, so empfiehlt sich in Weiterbildung der Erfindung die Merkmalskombination nach Anspruch 4. Der dort geschilderte Sperrschieber kann also wahlweise in einen rastenden Drehschalter eingebaut werden, soweit bei diesem Schalter sichergestellt werden soll, daß er nur durch eine gesonderte Manipulation den nächsten Schritt zuläßt. Dabei können entsprechend den Merkmalen nach Anspruch 5 an dem Rastring besondere Sperranschläge vorgesehen sein, welche gegen den in Sperrstellung befindlichen Sperrschieber anschlagen und somit ein Drehen des Rastrings und damit des Handgriffs verhindern. Es ist aber auch denkbar, daß der Sperrschieber selbst an den Zahnflanken des Rastrings angreift und ihn auf diese Weise gegenüber dem Träger arretiert.

Soll der Sperrschieber die Drehbewegung des Handgriffs und damit des Rastrings in beiden Drehrichtungen blockieren, so empfiehlt sich in Weiterbildung der Erfindung die Merkmalskombination nach Anspruch 6. Dabei ist sowohl denkbar, daß der Sperrschieber gabelförmig einen Sperranschlag auf dem Rastring von beiden Seiten umgreift oder aber stabförmig in den Zwischenraum zwischen zwei Sperranschlägen an dem Rastring eintaucht.

Soweit man die Betätigungseinrichtung, also den Handgriff, in seiner axialen Richtung nicht gleichzeitig zum dauerhaften Schalten eines Schiebekontakts ausnutzt, kann entsprechend den Merkmalen nach Anspruch 7 eine einfache Axialbewegung der Betätigungseinrichtung genügen, um eine entsperrende Lage zu erreichen, in der sich der Handgriff drehen läßt. In anderen Fällen kann es sich empfehlen, wie im Zusammenhang mit Anspruch 10 erläutert, eine besondere Handhabe wie beispielsweise einen Betätigungsknopf am äußeren Ende des Handgriffs vorzusehen, durch welchen sich ohne Bedienung des Handgriffs eine Entsperrung vornehmen läßt, etwa indem der Bedienungsknopf in Längsrichtung des Handgriffs gegenüber diesem verschoben wird. Um nach dem Entsperren und dem Erreichen einer neuen Drehlage den Sperrschieber selbsttätig in seine Sperrlage zurückzufahren, empfiehlt sich in Weiterbildung der Erfindung die Merkmalskombination nach Anspruch 8. Auch um zu verhindern, daß eine Entsperrung unabsichtlich vorgenommen wird, empfiehlt sich weiterhin gemäß der Merkmalskombination nach Anspruch 8 die Entsperrung entgegen der Kraft einer Feder vorzunehmen, damit der Sperrschieber durch Schüttelbewegungen oder ähnliches nicht selbsttätig in seine entsperrende Lage gelangen kann. Der Rastring kann nun derart aufgebaut sein, daß er durch axiale Verschiebung der Betätigungseinrichtung, also des Handgriffs, in seine entsperrende Lage gebracht wird, indem die Betätigungseinrichtung den Sperrschieber bei ihrer Längsverschiebung in seine entsperrende Lage stößt. Auf diese Weise kann dieselbe Feder, welche sich an der Betätigungseinrichtung abstützt, um den Rastring in Eingriff mit der Gegenkontur zu halten, gleichzeitig auch die Vorspannung aufbringen, gegen die der Sperrschieber aus seiner Sperrlage gebracht werden muß. Die Rastkraft ist also die gleiche, wie die zur Betätigung des Sperrschiebers.

Koppelt man in axialer Richtung noch die Betätigungseinrichtung bzw. den Handgriff mit dem Sperrschieber, so zieht die gleiche Spiralfeder beim Loslassen des Handgriffs den Sperrschieber wieder in seine Sperrlage gegenüber dem Rastring zurück. Die entsprechende Merkmalskombination ist im Zusammenhang mit Anspruch 9 aufgeführt.

Vielfach ist es erwünscht, daß ein an sich zur schiebenden Betätigung in axialer Richtung von Schaltkontakten geeigneter Schalter für diese Betätigungsart gesperrt wird oder daß ein axial betätigender Schaltknopf in seiner Axialbetätigung behindert werden soll. In diesen Fällen soll ein multifunktionaler, an sich zur Schaltung in axialer Richtung und in Drehrichtung geeigneter Schalter auf einen Drehschalter reduziert werden. Soweit dies erwünscht ist, empfiehlt sich in Weiterbildung der Erfindung die Merkmalskombination nach Anspruch 11. Danach sorgt ein Sperrelement dafür, daß der Schaltknopf oder der Handgriff in axialer Längsrichtung verschoben und damit zu einer Betätigung von Kontakten in dieser Richtung ausgenutzt werden können. Dabei kann das Sperrelement ein einfacher Ring sein, welcher sich am Träger abstützt und gegen geeignete Flächen an dem Handgriff oder an dem Betätigungsknopf liegt, so daß diese gegenüber der Stirnfläche des Rings zwar verdreht, aber nicht gegen die Stirnfläche des Rings verschoben werden können.

Mit Hilfe der Rastkonturen ist es auch möglich, die möglichen Schaltstellungen festzulegen, in welchen die vorgesehenen Kontakte miteinander elektrisch in Verbindung treten. Steht insgesamt nur ein bestimmter Schaltwinkel für Schaltaufgaben zur Verfügung, so kann man durch die Verteilung einer entsprechenden Anzahl von Rastzähnen diesen Schaltwinkel in einzelne Schaltstellungen unterteilen. Bei dem vorliegenden Schalter ist es somit beispielsweise möglich, innerhalb eines vorgesehenen Schaltwinkels fünf verschiedene Schaltstellungen einzunehmen, so daß von einer Mittelstellung aus zwei Raststellungen in rechter und zwei Raststellungen in linker Drehung erreicht werden können.

Ein Ausführungsbeispiel der Erfindung wird nachfolgend anhand der Zeichnung erläutert. Darin zeigt:
Fig. 1 einen Längsschnitt durch den Schalter und
Fig. 2 einen Querschnitt durch den Schalter nach Fig. 1.

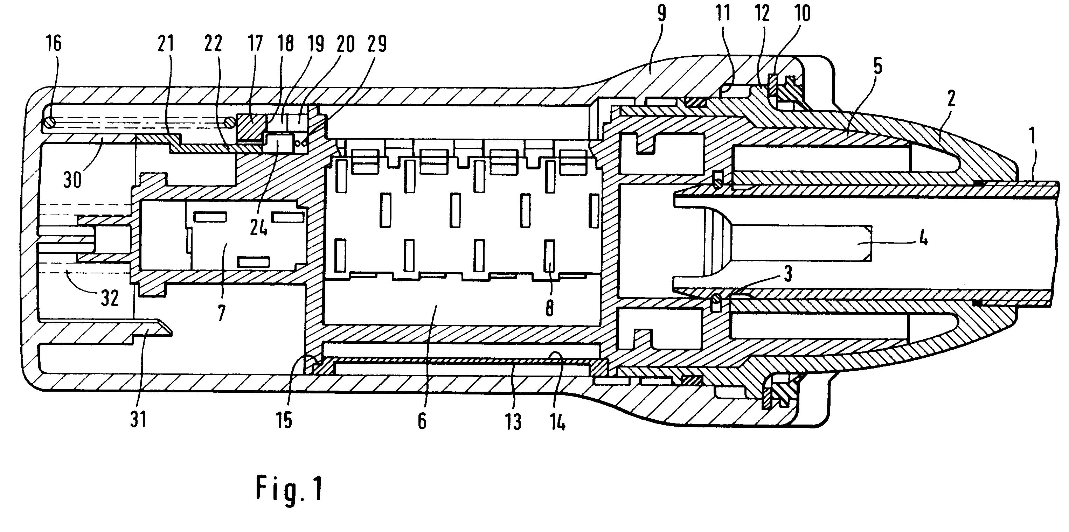

In Fig. 1 ist das Ende eines Betätigungshebels 1 zu erkennen, welcher in das nicht dargestellte Schaltergehäuse eines Lenkstockschalters reicht. Hinsichtlich des nachfolgend beschriebenen Drehschalters wird auf die nicht vorveröffentlichte Patentanmeldung 195 28 641.3 der Amelderin verwiesen, in der eine vergleichbare Konstruktion (nächstligender Stand der Technik) schon hinreichend genau beschrieben wurde. An dieser Stelle werden daher nur Merkmale erwähnt, soweit sie gegenüber den schon beschriebenen Merkmalen abweichen.

Auf den hohlzylinderförmigen Betätigungshebel 1 ist ein im wesentlichen ringförmiger Halter 2 aufgesetzt und gegenüber dem Betätigungshebel 1 starr fixiert. Dies kann beispielsweise durch Verrasten über die Befestigungsöffnungen 3,4 in dem Betätigungshebel geschehen.

Mit dem Betätigungshebel 1 und dem Halter 2 ist ein Träger 5 starr verbunden, so daß Betätigungshebel 1, Halter 2 und Träger 5 eine Baueinheit ergeben. Der Träger 5 besitzt zwei Buchten 6,7, die in Fig. 1 in Draufsicht gezeichnet sind. Die Aufnahmebucht 6 ist zur Aufnahme von vier Mikroschaltern geeignet, während in die Bucht 7 ein Mikroschalter hierzu quer eingesetzt werden kann. In Fig. 1 sind Öffnungsschlitze 8 zu erkennen, durch welche im eingebauten Zustand des nicht dargestellten Mikroschalters dessen Steckanschlüsse ragen können.

Durch die äußere Kontur des Trägers 5 und des Halters 2 wird ein als Handgriff ausgestaltetes Betätigungselement 9 derart gelagert, daß es gegenüber seiner Längsachse sowohl drehbar als auch verschiebbar ist. Dabei ist der Verschiebungsweg durch den Sicherungsring 10 und eine Stufe 11 am Betätigungselement 9 vorgegeben, die gegen eine Konsole 12 des Halters 2 einwirken. Die Betätigungsstößel der nicht dargestellten Mikroschalter weisen aus der Betrachtungsebene zum Betrachter hin und werden überwölbt durch eine bogenförmige Schaltkulisse 13, an deren bogenförmiger Innenfläche 14 nicht dargestellte Schaltkonturen in Umfangsrichtung verlaufen. Das Betätigungselement 9 kann gegenüber der Schaltkulisse 13 axial verschoben werden, nimmt aber bei einer Drehbewegung die Schaltkulisse in Umfangsrichtung mit, so daß durch eine derartige Drehbewegung die Schaltkulisse in einem Kreisbogen über die nicht dargestellten Stößel der Mikroschalter geführt wird. Durch entsprechende Erhebungen auf den Schaltkonturen werden so die Mikroschalter in der Aufnahmebucht 6 in Abhängigkeit von der Winkellage der Schaltkulisse 13 durchgeschaltet, wobei durch die drehfeste Verbindung zwischen Schaltkulisse und Betätigungselement die Winkellage der Schaltkulisse 13 mit der Drehlage des Betätigungselements 9 starr gekoppelt ist. Auf diese Weise lassen sich durch Drehen des Handgriffs 9 in einer durch die Konturen der Schaltkulisse vorgegebenen Reihenfolge die einzelnen Mikroschalter in der Bucht 6 schalten. Dabei sind bei dem vorliegenden Ausführungsbeispiel 5 verschiedene Schaltstellungen vorgesehen. Ein besonderer Vorteil der Erfindung besteht darin, daß durch einfaches Auswechseln der bogenförmigen Schaltkulisse Schaltwinkel und Schaltfolge der einzelnen Mikroschalter leicht änderbar sind. Darüber hinaus kann die Bucht 6 regelbar mit Mikroschaltern bestückt werden, so daß nicht alle Plätze der beiden Buchten 6 und 7 mit Mikroschaltern besetzt sein müssen.

Wie aus Fig. 1 ersichtlich, ist an dem in Fig. 1 linken Randbereich der Schaltkulisse 13 eine Kreissektorstufe 15 herausgearbeitet, der eine entsprechende Kontur im Führungsbereich des Trägers zugeordnet ist. Da die Kreissektorstufe 15 im rechten Randbereich der Schaltkulisse fehlt, ist sichergestellt, daß die Schaltkulisse 13 nur seitenrichtig in den Träger eingesetzt werden kann, da andernfalls das Betätigungselement 9 sich nicht über die vorspringende Schaltkulisse 13 schieben läßt.

Am in Fig. 1 linken Ende des Handgriffs 9 stützt sich eine Spiralfeder 16 ab, welche den Handgriff so weit nach links drückt, bis der Sicherungsring 10 an der Konsole 12 anschlägt. Das gegenüberliegende Ende der Spiralfeder 16 wirkt auf einen in dem Handgriff 9 drehfest aber radial verschiebbar gelagerten Rastring 17 ein, von dem in Fig. 1 nur die obere Hälfte dargestellt ist. Über zwei bogenförmige Abschnitte der kreisbogenförmigen Stirnfläche 18 des Rastrings 17 sind axial vorspringende Rastzähne in gleichmäßigem Abstand verteilt, denen entsprechende Rastzähne 20 am Träger 5 zugeordnet sind. Die Rastzähne 19 bilden somit eine Rastkontur, denen durch die Rastzähne 20 eine Gegenkontur zugeordnet ist. Die einzelnen Zähne haben geneigte Flanken, so daß bei einer Drehbewegung des Handgriffs 9 der Rastring 17 in Drehrichtung mitgenommen und durch die schrägen Flanken der Zähne entgegen der Kraft der Spiralfeder 16 nach links aus dem Eingriff herausgehoben wird. Sobald die Zähne außer Eingriff sind, kommen die Zähne um einen Zahn versetzt bei einer weiteren Drehbewegung erneut in Eingriff und ziehen den Drehhebel in die nächste Schaltstellung. Auf diese Weise rastet der Handgriff 9 in vorgegebenen Drehwinkelschritten in seine einzelnen Drehschaltstellungen ein, denen über die Steuerkurven an der Schaltkulisse 13 die gewünschten Durchschaltvorgänge der Mikroschalter zugeordnet sind.

Für die Erfindung besonders wichtig ist nun die Möglichkeit, daß ein drehendes Weiterschalten des hier beschriebenen Drehschalters nur dann vorgenommen werden kann, wenn vorher ein besonderer Eingriff vorgenommen wird. Dies geschieht durch einen ringförmigen Sperrschieber 21, der zwei Klauen 22 besitzt, die auf axialen Schienen 23 des Trägers 5 in axialer Richtung verschiebbar aber nicht drehbar sind. Auch von dem ringförmigen Sperrschieber 21 ist in Fig. 1 nur die obere Hälfte dargestellt. Der Handgriff 9 ist mit dem Sperrschieber 21 in axialer Richtung beispielsweise durch Verrasten gekoppelt, ist aber gegenüber dem nicht drehbar gelagerten Sperrschieber 21 drehbar. Statt der axialen Kopplung zwischen Sperrschieber 21 und Handgriff 9 kann auch eine spiralförmige Rückhohlfeder 29 vorgesehen sein.

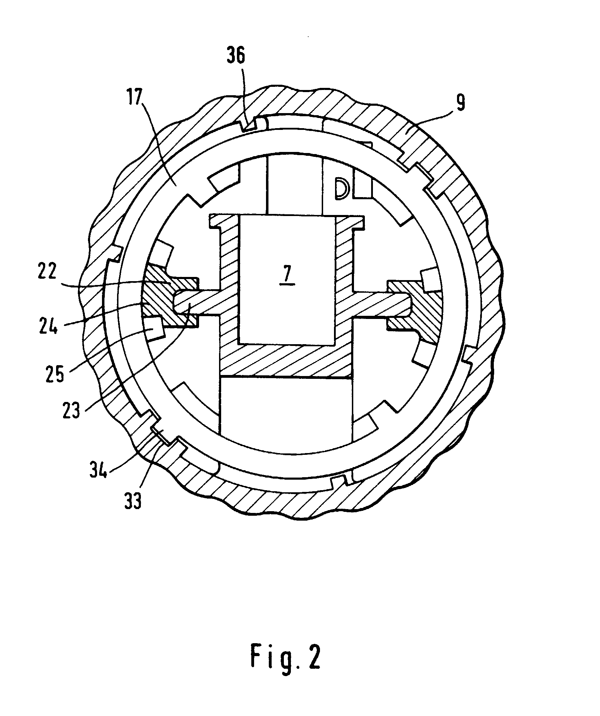

Damit wird in dem Normalzustand durch die Kraft der Feder 16 oder die Kraft der Feder 29 der Sperrschieber 21 in Fig. 1 nach links verschoben und greift mit seinen Arretiervorsprüngen 24 zwischen zwei Sicherungsanschläge 25 des Rastrings 17 ein (siehe Fig. 2). Damit läßt sich der Rastring nicht mehr drehen und dementsprechend wegen der drehfesten Verbindung zwischen Rastring 17 und Handgriff 9 auch nicht mehr der Handgriff. Ein unbeabsichtigtes Verdrehen oder ein unbeabsichtigtes Weiterdrehen ist somit nicht möglich. Soll nun tatsächlich ein Verdrehen des Handgriffs vorgenommen werden, so muß dieser in Fig. 1 nach rechts axial verschoben werden. Hierdurch gelangen die Arretiervorsprünge 24 außer Eingriff gegenüber den Sicherungsanschlägen 25. Eine Verschiebung in Fig. 1 nach rechts zur Entsicherung geschieht dadurch, daß das Betätigungselement 9 nach rechts verschoben wird und mit seiner Ringwand 30 den ringförmigen Sperrschieber 21 nach rechts verschiebt. In dieser axialen Lage des Betätigungselements 9 läßt es sich um einen Schritt oder mehrere weiterdrehen, wobei der Rastring 17 in einzelnen Drehwinkelschritten einrastet. In Fig. 1 ist noch ein um 90° versetzt gezeichneter Schaltansatz 31 zu erkennen, welcher zur Betätigung des Schaltstößels eines in der Bucht 7 sitzenden Mikroschalters dienen kann, was durch eine axiale Bewegung des Handgriffs nach rechts geschieht. Soll auf eine Drehsicherung mittels des Sperrschiebers 21 verzichtet werden, so reicht es, diesen wegzulassen. Weiterhin ist es möglich, eine Axialverschiebung des Handgriffs 9 zu verhindern, etwa wenn ein Schalten in dieser Richtung mittels des Schaltansatzes 31 nicht notwendig ist. In diesem Falle läßt sich eine in Fig. 1 gestrichelt angedeutete Sperrhülse 32 einfügen, die den Handgriff 9 in axialer Richtung gegenüber dem Träger 5 festlegt.

In Fig. 2 ist ein Schnitt durch den Drehschalter in Höhe des Eingriffs zwischen Sicherungsanschlag 25 und Arretiervorsprüngen 24 gezeigt, wobei der Betrachter in Fig. 2 zum Ende des Handgriffs 9 hin in (Fig. 1 nach links) schaut. In Fig. 2 erkennt man die Führungsnuten 33 zur axialen Führung von Axialvorsprüngen 34 des Rastrings, so daß der Handgriff gegenüber dem Rastring zwar verschiebbar, aber gegenüber diesem nicht drehbar ist. Der Handgriff wird somit entweder durch den arretierten Rastring festgehalten oder er nimmt andernfalls den Rastring in Drehrichtung mit. Hinsichtlich der Rastzähne 20 ist es möglich, daß nur ein einziger Rastzahn oder zwei symmetrisch einander gegenüberliegende Rastzähne am Träger vorgesehen sind, die in entsprechende Rastausnehmungen der Rastkontur des Rastrings eingreifen. Unterhalb der beiden Rastzähne 20 können sich Rastvorsprünge von dem Träger aus über die Rastzähne 20 axial vorstrecken, die mit entsprechenden Anschlägen an dem Rastring für eine Begrenzung des für den Handgriff insgesamt zulässigen Drehwinkels sorgen. Auf diese Weise kann durch Auswechseln des Rastrings nicht nur die Anzahl der Drehschritte geändert, sondern auch der zulässige Drehwinkel variiert werden.

Über Stützstege 36 ist die Oberfläche des Rastrings 17 gegenüber der Innenfläche des Handgriffs 9 zusätzlich abgestützt. In Fig. 2 ist der Handgriff 9 an einem in der Zeichnung linken Ende geschlossen dargestellt. Es kann aber auch die in der Anmeldung P44 39 905.7 beschriebene Handhabe eingefügt sein, welche eine von der axialen Verschiebung des Handgriffs unabhängige Betätigung des in der Bucht 24 befindlichen Mikroschalters ermöglicht, so daß dieser Mikro-schalter betätigt werden kann ohne den Drehgriff in Drehrichtung entsichern zu müssen.

## Patentansprüche

1. Elektrische Schalter mit einem Kontaktstücke tragenden Träger, bei dem mittels der Kontaktstücke durch Bewegung eines auf dem Träger (5) geführten und diesen zumindest teilweise umschließenden Betätigungselements (9) in mindestens einer ersten Bewegungsrichtung elektrische Kontakte geschlossen werden, wobei das Betätigungselement (9) gegenüber dem Träger um dessen Längsachse verdrehbar und/oder in Richtung von dessen Längsachse verschiebbar ist, dadurch **gekennzeichnet,** daß zur Festlegung von Drehstellungen des Betätigungselements (9) gegenüber dem Träger (5) ein Rastring (17) vorgesehen ist, welcher gegenüber dem Betätigungselement (9) drehfest und axial verschiebbar gelagert ist, wobei der Rastring (17) gegen das Betätigungselement (9) axial vorgespannt ist und mit einer Rastkontur (19) in eine entsprechende mit dem Träger verbundene Gegenkontur (20) eingreift.

2. Schalter nach Anspruch 1, dadurch **gekennzeichnet,** daß auf der Innenkontur des Rastrings (17) mindestens ein radial nach innen weisender Ringvorsprung vorgesehen ist, der mit mindestens einem Trägervorsprung (20) derart zusammenwirkt, daß er den Drehwinkel des Rastrings und damit des Betätigungselements (9) gegenüber dem Träger (5) begrenzt.

3. Schalter nach Anspruch 1 oder 2, dadurch **gekennzeichnet,** daß der Rastring (17) durch eine sich mit ihrem anderen Ende an dem Betätigungselement (9) abstützende Spiralfeder (16) in axialer Richtung vorgespannt ist.

4. Schalter nach einem der Ansprüche 1 bis 3, dadurch **gekennzeichnet,** daß ein Sperrschieber (21) an dem Träger (5) in axialer Richtung verschiebbar und gegenüber dem Träger drehfest angeordnet ist, welcher in einer ersten axialen Lage die Drehbewegung des Betätigungselements (9) behindert und in einer zweiten axialen Stellung die Drehbewegung des Betätigungselements (9) freigibt.

5. Schalter nach Anspruch 4, dadurch **gekennzeichnet,** daß der Sperrschieber (21) in seiner ersten axialen Lage an zumindest einem Sperranschlag (25) des Rastrings (17) angreift und dessen Drehbewegung blockiert.

6. Schalter nach Anspruch 5, dadurch **gekennzeichnet,** daß der Sperrschieber (21) in der ersten axialen Lage zwischen zwei benachbarten Sperranschlägen (25) des Rastrings (17) in beiden Drehrichtungen blockiert.

7. Schalter nach einem der Ansprüche 4 bis 6, dadurch **gekennzeichnet,** daß der Sperrschieber (21) durch eine axiale Verschiebung des Betätigungselements (9) von der sperrenden ersten axialen Lage in eine entsperrende Lage bringbar ist.

8. Schalter nach Anspruch 3 und 7, dadurch **gekennzeichnet,** daß die axiale Verschiebung des Betätigungselements (9) entgegen der Kraft der Spiralfeder (16) geschieht und daß eine Rückholfeder (29) vorgesehen ist, die bei Rückbewegung des Betätigungselements (9) in seiner Ausgangslage den Sperrschieber (21) in seine sperrende erste axiale Lage fördert.

9. Schalter nach Anspruch 8, dadurch **gekennzeichnet,** daß die Rückholfeder durch die Spiralfeder (16) gebildet ist und die Betätigungseinheit (9) gegenüber dem Sperrschieber (21) in axialer Richtung gekoppelt aber in Drehrichtung gegenüber dem Sperrschieber (21) frei beweglich gelagert ist.

10. Schalter nach einem der vorangegangenen Ansprüche, dadurch **gekennzeichnet,** daß er durch eine spezielle, unabhängig von der Betätigungseinheit (9) in axialer Richtung bewegbare Handhabe manuell betätigbar ist.

11. Schalter nach einem der Ansprüche 1 bis 3, dadurch **gekennzeichnet,** daß ein vorzugsweise ringförmiges Sperrelement (32), welches sich in axialer Richtung an dem Träger (5) abstützt, an dem Betätigungselement (9) angreift und dessen axiale Verschiebbarkeit, nicht aber dessen Drehbarkeit, behindert.

12. Schalter nach einem der Ansprüche 1 bis 11, dadurch **gekennzeichnet,** daß die Rastkontur (19) des Rastrings (17) und die Gegenkontur (20) des Trägers (5) derart mit einander im gleichen Abstand folgenden, auf einem Kreisring angeordneten zahnartigen Vor- und Rücksprüngen versehen sind, daß sie im miteinander verzahnten Zustand mindestens fünf verschiedene Winkelstellungen einnehmen können.

## Claims

1. Electric switches comprising a support carrying contact pieces, wherein electric contacts are closed by means of the contact pieces by moving an actuating element (9) guided on the support (5) and enclosing the same at least in part in at least one first direction of movement, with the actuating element (9) being rotatable vis-à-vis the support about the longitudinal axis thereof and/or displaceable toward the longitudinal axis thereof, characterized in that a locking ring (17) is provided for fixing rotating positions of the actuating element (9) vis-à-vis support (5), which ring (17) is arranged in a non-rotating and axially displaceable manner vis-à-vis the actuating element (9), with the locking ring (17) being axially biased against the actuating element (9) and, with a locking contour (19) engaging a conforming contour (20) connected to the support.

2. A switch according to claim 1, characterized in that provided on the inner contour of the locking ring (17) is at least one radially inwardly facing annular projection cooperating with at least one support projection (20), that it limits the angle of rotation of the locking ring and, hence, of the actuating element (9) vis-à-vis the support (5).

3. A switch according to claims 1 or 2, characterized in that the locking ring (17) is prestressed in the axial direction by a helical spring (16) supported with the other end thereof on the actuating element (9).

4. A switch according to any one of claims 1 through 3, characterized in that a gate valve (21) is arranged on the support (5) in a manner axially displaceable, and non-rotating vis-à-vis the support, with the said support, in a first axial position, impeding the rotating movement of the actuating element (9) and, in a second axial position, releasing the rotating movement of the actuating element (9).

5. A switch according to claim 4, characterized in that the gate valve (21), in its first axial position, engages at least one arresting stop (25) of the locking ring (17) to block the rotating movement thereof.

6. A switch according to claim 5, characterized in that the gate vale (21), in the first axial position between two adjacent arresting stops (25) of the locking ring (17) blocks in both directions of rotation.

7. A switch according to any one of claims 4 through 6, characterized in that the gate valve (21), by an axial displacement of the actuating element (9) can be placed from the locking first axial position into an unlocking position.

8. A switch according to claims 3 through 7, characterized in that the axial displacement of the actuating element (9) is against the force of the helical spring (16), and that a return spring (29) is provided which during the return movement of the actuating element (9) to its starting position moves the gate valve (21) into its locking first axial position.

9. A switch according to claim 8, characterized in that the return spring is formed by the helical spring (16) and the actuating unit (9), in the axial direction, is coupled while in the direction of rotation is freely movable vis-à-vis the gate valve (21).

10. A switch according to any one of the preceding claims, characterized in that it is manually operable by a special element movable in the axial direction independently of the actuating unit (9).

11. A switch according to any one of claims 1 through 3, characterized in that a preferably annular blocking element (32) axially supported on the support (5) engages the actuating element (9) impeding the axial displaceability but not the rotatability thereof.

12. A switch according to any one of claims 1 through 11, characterized in that the locking contour (119) of the locking ring (17) and the conforming contour (20) of the support (5) are so provided with tooth-type projections and recesses equidistantly arranged on a circular ring that in the meshing condition they can take at least five different angular positions.

## Revendications

1. Interrupteur électrique comprenant un support portant des éléments de contact, selon lequel, au moyen des éléments de contact, des contacts électriques sont fermés par le déplacement dans au moins une première direction de déplacement d'un élément d'actionnement (9) guidé sur le support (5) et entourant au moins partiellement ce dernier, l'élément d'actionnement (9) étant rotatif par rapport au support autour de l'axe longitudinal de ce dernier, et/ou étant coulissant dans la direction de l'axe longitudinal du support, **caractérisé** en ce que, afin de fixer des positions de rotation de l'élément d'actionnement (9) par rapport au support (5), il est prévu une bague de crantage (17) qui est montée en solidarité de rotation et à coulissement axial par rapport à l'élément d'actionnement (9), la bague de crantage (17) étant axialement précontrainte à l'encontre de l'élément d'actionnement (9) et s'engageant par un contour de crantage (19) dans un contour complémentaire correspondant (20) assemblé au support.

2. Interrupteur selon la revendication 1, **caractérisé** en ce qu'au moins une saillie annulaire dirigée radialement vers l'intérieur est prévue sur le contour intérieur de la bague de crantage (17), saillie qui coopère avec au moins une saillie (20) du support de telle sorte qu'elle limite l'angle de rotation de la bague de crantage et donc de l'élément d'actionnement (9) par rapport au support (5).

3. Interrupteur selon la revendication 1 ou 2, **caractérisé** en ce que la bague de crantage (17) est précontrainte en direction axiale par un ressort spiral (16) s'appuyant par son autre extrémité contre l'élément d'actionnement (9).

4. Interrupteur selon l'une des revendications 1 à 3, **caractérisé** en ce qu'un coulisseau d'arrêt (21) est disposé sur le support (5) à coulissement en direction axiale et en solidarité de rotation par rapport au support, coulisseau qui empêche le mouvement de rotation de l'élément d'actionnement (9) dans une première position axiale, et qui autorise le mouvement de rotation de l'élément d'actionnement (9) dans une deuxième position axiale.

5. Interrupteur selon la revendication 4, **caractérisé** en ce que le coulisseau d'arrêt (21), dans sa première position axiale, agit sur au moins une butée d'arrêt (25) de la bague de crantage (17) et bloque le mouvement de rotation de cette dernière.

6. Interrupteur selon la revendication 5, **caractérisé** en ce que le coulisseau d'arrêt (21), dans la première position axiale, assure le blocage dans les deux directions de rotation entre deux butées d'arrêt voisines (25) de la bague de crantage (17).

7. Interrupteur selon l'une des revendications 4 à 6, **caractérisé** en ce que le coulisseau d'arrêt (21) peut être amené, par un coulissement axial de l'élément d'actionnement (9), de la première position axiale de blocage dans une position de déblocage.

8. Interrupteur selon les revendications 3 et 7, **caractérisé** en ce que le coulissement axial de l'élément d'actionnement (9) s'effectue à l'encontre de la force du ressort spiral (16), et en ce qu'il est prévu un ressort de rappel (29) qui, lors du mouvement de retour de l'élément d'actionnement (9) dans sa position initiale, repousse le coulisseau d'arrêt (21) dans sa première position axiale de blocage.

9. Interrupteur selon la revendication 8, **caractérisé** en ce que le ressort de rappel est formé par le ressort spiral (16), et l'unité d'actionnement (9) est montée en étant accouplée en direction axiale au coulisseau d'arrêt (21), mais en étant librement mobile en rotation par rapport au coulisseau d'arrêt (21).

10. Interrupteur selon l'une des revendications précédentes, **caractérisé** en ce qu'il peut être actionné manuellement par une manette spéciale, qui peut être déplacée en direction axiale indépendamment de l'unité d'actionnement (9).

11. Interrupteur selon l'une des revendications 1 à 3, **caractérisé** en ce qu'un élément d'arrêt (32) de préférence annulaire, qui s'appuie en direction axiale contre le support (5), agit sur l'élément d'actionnement (9) et empêche sa faculté de coulissement axial, mais non sa faculté de rotation.

12. Interrupteur selon l'une des revendications 1 à 11, **caractérisé** en ce que le contour de crantage (19) de la bague de crantage (17) et le contour complémentaire (20) du support (5) sont dotés de saillies et de retraits du genre dents, se succédant à égale distance et disposés sur un anneau de cercle, de telle sorte qu'ils peuvent prendre, à l'état d'engrènement mutuel, au moins cinq positions angulaires différentes.
